# EUROPÄISCHE PATENTSCHRIFT

(11) **EP 2 929 211 B1**
(45) Veröffentlichungstag und Bekanntmachung des Hinweises auf die Patenterteilung: **20.06.2018**
(21) Anmeldenummer: 13802336.1
(22) Anmeldetag: 05.12.2013
(51) Int. Cl.: F16F 9/32

(54) **STOSSDÄMPFER FÜR EIN FAHRZEUG MIT EINEM FLANSCH ZUR VERBINDUNG EINES EXTERNEN MODULROHRES**
DAMPER FOR A VEHICLE HAVING A FLANGE FOR CONNECTING AN EXTERNAL MODULE TUBE
AMORTISSEUR DE CHOCS POUR VÉHICULE AVEC BRIDE DE RACCORDEMENT À UN TUBE DE MODULE EXTERNE

(30) Priorität: 07.12.2012 DE 102012111938
(43) Veröffentlichungstag der Anmeldung: 14.10.2015
(73) Patentinhaber: ThyssenKrupp Bilstein GmbH, 58256 Ennepetal (DE)
(72) Erfinder: SCHMIDT, Klaus, 51519 Odenthal (DE); GÖTZ, Ole, 38112 Braunschweig (DE); SCHNERCH, Bastian, 58256 Ennepetal (DE)
(74) Vertreter: thyssenkrupp Intellectual Property GmbH
(86) Internationale Anmeldenummer: PCT/EP2013/075599
(87) Internationale Veröffentlichungsnummer: WO 2014/086897

(56) Entgegenhaltungen:
- EP-A2- 1 508 723
- WO-A1-2009/081363
- DE-A1- 10 355 151
- DE-B3-102008 062 162
- JP-A- H0 791 478

## Beschreibung

Die vorliegende Erfindung betrifft einen Stoßdämpfer mit einem Stoßdämpferrohr und mit einem externen Modulrohr, das mittels einem Flansch außenseitig am Stoßdämpferrohr haltend angeordnet ist, wobei der Flansch ein oder mehrere Fluidkanäle aufweist, die das Modulrohr mit dem Stoßdämpferrohr fluidisch koppeln.

### STAND DER TECHNIK

Aus der DE 11 2007 002 377 T5 ist beispielsweise ein Stoßdämpfer mit einem Stoßdämpferrohr bekannt, und es ist ein externes Modulrohr vorgesehen, in dem eine weitere Ventilanordnung aufgenommen ist. Das Modulrohr erstreckt sich dabei senkrecht zum Stoßdämpferrohr, und der Flansch zur Verbindung des Modulrohres mit dem Stoßdämpferrohr ist durch das Modulrohr selbst gebildet. Aus der DE 11 2008 001 980 T5 ist ein Stoßdämpfer mit einem Stoßdämpferrohr und mit einem externen Modulrohr bekannt, in dem eine Ventilkörperanordnung aufgenommen ist. Zwischen dem Stoßdämpferrohr und dem Modulrohr befinden sich Transferringe, die einen Flansch zwischen den beiden Rohren bilden und über die das Modulrohr am Stoßdämpferrohr haltend angebracht ist. Durch die Transferringe hindurch sind Fluidkanäle gebildet, um die Ventilkörperanordnung im externen Modulrohr mit dem Stoßdämpferrohr zu verbinden. Dabei ist der maximal mögliche Abstand des Modulrohres vom Stoßdämpferrohr durch die Ausführung der Transferringe baulich begrenzt. Eine Verbindung zwischen Stoßdämpfer und Modulrohr gemäß der Präambel von Anspruch 1 und 8 ist in der DE10355151 dargestellt. Die Verbindung zwischen dem Modulrohr und dem Stoßdämpferrohr muss neben der fluidischen Verbindungsfunktion eine mechanische Haltefunktion erfüllen. Dabei ist eine große mechanische Festigkeit des Modulrohres am Stoßdämpferrohr gefordert, und wenn der Abstand zwischen dem Modulrohr und dem Stoßdämpferrohr beispielsweise aus baulichen Gründen vergrößert werden muss, kann die Flanschverbindung zwischen dem Modulrohr und dem Stoßdämpferrohr nicht mehr durch Transferringe gebildet werden, da diese mechanisch nicht mehr hinreichend belastbar sind.

Zwar kann ein Flansch aus einem metallischen Werkstoff bereitgestellt werden, der eine hohe Festigkeit zwischen dem Modulrohr und dem Stoßdämpferrohr ermöglicht, insbesondere dann, wenn die Rohre mit dem Flansch verschweißt werden, jedoch kann ein Flansch beispielsweise aus einem metallischen Vollmaterial schnell ein hohes Gewicht aufweisen. Insbesondere dann, wenn Stoßdämpferrohre als ungefederte Massen an einem Fahrzeug Verwendung finden, ist es wichtig, ein geringes Gewicht des Stoßdämpfers zu erreichen. Ein Flansch aus einem Kunststoffmaterial wäre zwar leichter, dieser würde aber die geforderte Festigkeit nicht erreichen, und das Modulrohr wäre am Stoßdämpferrohr mechanisch nicht hinreichend fest angebracht.

Wird beispielsweise ein Flansch aus einem metallischen Vollmaterial bereitgestellt, so ergibt sich ferner das Problem der Abdichtung der Fluidkanäle zu den Rohrkörpern. Die Fluidkanäle müssen den Flansch durchwandern und mit Öffnungen in Verbindung gebracht werden, die im Stoßdämpferrohr und im Modulrohr eingebracht sind. Wird die Verbindung zwischen dem Flansch und den Rohren durch eine Schweißverbindung gebildet, entsteht die Schwierigkeit der Abdichtung zwischen den Fluidkanälen im Flansch und den Außenseiten der Rohre.

### OFFENBARUNG DER ERFINDUNG

Es ist daher die Aufgabe der vorliegenden Erfindung, einen Stoßdämpfer mit einem Stoßdämpferrohr und mit einem externen Modulrohr zu schaffen, bei dem die Verbindung zwischen dem Modulrohr und dem Stoßdämpferrohr durch einen verbesserten Flansch gebildet ist, der eine mechanisch belastbare Anordnung des Modulrohres am Stoßdämpferrohr ermöglicht und ein geringes Gewicht aufweist. Zudem muss die Aufgabe erfüllt werden, die Fluidkanäle mit dem Stoßdämpferrohr und dem Modulrohr druckdicht zu verbinden.

Diese Aufgabe wird ausgehend von einem Stoßdämpfer gemäß dem Oberbegriff des Anspruches 1 und ausgehend von einem Flansch gemäß dem Oberbegriff des Anspruches 8 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass der Flansch einen Kunststoffkörper aufweist, in dem die Fluidkanäle ausgebildet sind, und dass der Flansch weiterhin metallische Verbindungselemente aufweist, die sich zwischen dem Stoßdämpferrohr und dem Modulrohr erstrecken und durch die die mechanisch haltende Verbindung zwischen dem Stoßdämpferrohr und dem Modulrohr gebildet ist.

Die Erfindung geht dabei von dem Gedanken aus, einen Flansch zwischen einem Stoßdämpferrohr und einem externen Modulrohr zu schaffen, im Folgenden vereinfachend als Rohre bezeichnet, der zur mechanisch belastbaren Verbindung der beiden Rohre wenigstens zwei und bevorzugt mehrere metallische Verbindungselemente aufweist, die sich zwischen dem Stoßdämpferrohr und dem Modulrohr erstrecken. Zur fluidischen Verbindung der beiden Rohre sind Fluidkanäle vorgesehen, die in einem Kunststoffkörper ausgebildet sind. Damit muss der Kunststoffkörper keine mechanischen Haltekräfte aufnehmen, um das Modulrohr mit dem Stoßdämpferrohr zu verbinden, und der Kunststoffkörper kann die Fluidkanäle auf vorteilhafte Weise ausbilden, ohne dass die Verbindungselemente zur Bildung der Fluidkanäle optimiert werden müssen. Der so gebildete Flansch weist ein geringes Gewicht auf, und die metallischen Verbindungselemente können beabstandet zueinander um die Fluidkanäle im Kunststoffkörper angeordnet werden. Durch die beabstandete Anordnung der Verbindungselemente entsteht folglich eine verbesserte Belastungssituation. Die metallischen Verbindungselemente können so zwischen den beiden Rohren angeordnet sein, dass die Fluidkanäle durch die Verbindungselemente umgeben sind.

Gemäß einer ersten möglichen Ausführungsform können die metallischen Verbindungselemente durch vorzugsweise im Wesentlichen plan ausgebildete plattenförmige Metallelemente ausgeführt sein, die vorzugsweise außenseitig am Kunststoffkörper angeordnet sind. Die vorzugsweise plan ausgebildeten plattenförmigen Metallelemente können Randbereiche aufweisen, die auf die Rohre zuweisen und mit denen diese insbesondere stoffschlüssig, beispielsweise durch ein Schweißverfahren oder durch ein Lötverfahren, verbunden sind. Der Kunststoffkörper kann dabei zwischen den parallel zueinander ausgerichteten plattenförmigen Metallelementen angeordnet werden, und die Randbereiche der plattenförmigen Metallelemente grenzen an das Stoßdämpferrohr und an das Modulrohr an. Beispielsweise können die plattenförmigen Metallelemente eine zueinander gleiche, rechteckige Form aufweisen und sich in Längsrichtung der Rohre erstrecken. Folglich bleiben die oberen und unteren Seiten des Kunststoffkörpers frei, und um zu vermeiden, dass der Kunststoffkörper zwischen den plattenförmigen Metallelementen herauswandern kann, können die plattenförmigen Metallelemente Haltelaschen aufweisen, durch die verhindert ist, dass der Kunststoffkörper seine Position zwischen den plattenförmigen Metallelementen verlässt, insbesondere wenn der Stoßdämpfer mit dem Modulrohr und folglich auch mit dem Flansch dynamisch belastet wird.

Nach einer weiteren möglichen Ausführungsform können die metallischen Verbindungselemente durch beispielsweise aus einem Metallbandmaterial ausgebildete Verbindungsstreifen oder aus Stangenmaterial ausgebildete Verbindungsstangen gebildet sein, die sich mit im Wesentlichen gleich bleibendem Querschnitt zwischen dem Stoßdämpferrohr und dem externen Modulrohr erstrecken. Die Verbindungsstreifen oder Verbindungsstangen können einen runden, einen rechteckigen und bevorzugt einen flachen, bandförmigen Querschnitt aufweisen und aus einem abgelängten Stangenmaterial oder Bandmaterial hergestellt sein. Zur Verbindung der beiden Rohre können sich die Verbindungsstreifen oder Verbindungsstangen folglich parallel zueinander zwischen den Oberflächen der Rohre erstrecken und zur Verbindung der Verbindungsstreifen oder Verbindungsstangen mit dem Stoßdämpferrohr und dem Modulrohr können diese über ihre ersten und zweiten Endseiten mit den Rohren insbesondere stoffschlüssig verbunden sein. Beispielsweise können die Verbindungsstreifen oder Verbindungsstangen mit den Rohren verschweißt werden, um die mechanisch haltende Verbindung zwischen den Rohren zu schaffen.

Die Anordnung der metallischen Verbindungselemente relativ zum Kunststoffkörper kann auf verschiedene Weise ausgeführt sein. Die Verbindungselemente und der Kunststoffkörper müssen nicht zwangsläufig eine bauliche Einheit bilden, und beispielsweise können die Verbindungselemente außerhalb des Kunststoffkörpers zwischen dem Stoßdämpferrohr und dem Modulrohr angeordnet sein. Auf bevorzugte Weise können die plattenförmigen Metallelemente außenseitig am Kunststoffkörper verlaufen, beispielsweise als Sandwichbauweise, und die Verbindungsstreifen oder Verbindungsstangen können durch den Kunststoffkörper hindurchgeführt sein, oder die Verbindungsstreifen oder Verbindungsstangen erstrecken sich wenigstens teilweise ebenfalls außenseitig am Kunststoffkörper zwischen dem Stoßdämpferrohr und dem Modulrohr. Auch kann vorgesehen sein, dass der Kunststoffkörper außenseitig Aufnahmetaschen aufweist, in denen die Verbindungsstreifen oder Verbindungsstangen einsitzen. Ebenso wie Verbindungselemente, die als Verbindungsstreifen oder Verbindungsstangen ausgeführt und durch den Kunststoffkörper verlaufen können, können auch die plattenförmigen Metallelemente innen im Kunststoffkörper aufgenommen sein, beispielsweise derart, dass die plattenförmigen Metallelemente durch den Kunststoffkörper durch ein Umspritzen im Kunststoffmaterial aufgenommen sind.

Auf besonders vorteilhafte Weise können die Fluidkanäle durch Durchgänge im Kunststoffkörper gebildet sein. Der Kunststoffkörper kann aus einem faserverstärkten, festen Kunststoff bestehen, beispielsweise aus faserverstärktem Polyamid, und auch bei wechselnden Drücken eines durch die Durchgänge geführten Fluids führt dabei die Druckbelastung aus dem Inneren der Fluidkanäle nicht zur Beschädigung des Kunststoffkörpers. Zwischen dem Kunststoffkörper und dem Stoßdämpferrohr und/oder dem Modulrohr können Dichtelemente zur Dichtung der Durchgänge angeordnet werden. Beispielsweise können die Dichtelemente durch O-Ring-Dichtungen gebildet sein. Dadurch entsteht eine sehr einfache Ausführungsform des Flansches, bei dem die Fluidkanäle durch einfache Durchgänge im Kunststoffkörper gebildet sind. Insbesondere kann der Kunststoffkörper zur Aufnahme der Dichtelemente ausgebildet sein.

Nach einer weiteren vorteilhaften Ausführungsform können die Fluidkanäle auch durch vorzugweise metallische Rohrelemente gebildet sein, die im Kunststoffkörper aufgenommen sind. Die Rohrelemente können beispielsweise als Spritzguss-Einlegeteile ausgeführt sein, die mit dem Material des Kunststoffkörpers im Kunststoff-Spritzgussverfahren umspritzt werden und so zwischen dem Stoßdämpferrohr und dem externen Modulrohr verlaufend in Position gehalten werden. Alternativ können die Rohrelemente auch nach Bereitstellung des Kunststoffkörpers in diesen eingeführt werden. Auch zwischen den Rohrelementen und dem Stoßdämpferrohr und/oder dem Modulrohr können Dichtelemente zur Dichtung des Übergangs zwischen den Rohrelementen und dem Stoßdämpferrohr beziehungsweise dem Modulrohr angeordnet werden. Werden metallische Rohrelemente verwendet, können diese druckfester ausgeführt sein als Durchgänge im Kunststoffkörper, und metallische Rohrelemente zur Bildung der Fluidkanäle im Kunststoffkörper können beispielsweise dann vorgesehen werden, wenn ein Fluid mit hohen Drücken durch die Fluidkanäle geführt werden muss oder wenn bevorzugt ein weiches Material zur Bildung des Kunststoffkörpers gewählt wird.

Durch die Ausführung der Verbindungselemente aus einem metallischen Material ergibt sich der besondere Vorteil, dass die Verbindungselemente mit dem Stoßdämpferrohr und mit dem externen Modulrohr verschweißt werden können. Alternativ zum Verschweißen der Verbindungselemente mit dem Stoßdämpferrohr und mit dem Modulrohr können auch Lötverbindungen vorgesehen sein. Die Schweißverbindungen oder die Lötverbindungen werden hergestellt zwischen den Randseiten, wenn die Verbindungselemente als plattenförmige Metallelemente ausgeführt sind, beziehungsweise zwischen den Endseiten, wenn die Verbindungselemente als Verbindungsstreifen oder Verbindungsstangen ausgeführt sind, wobei die Randseiten der plattenförmigen Metallelemente beziehungsweise die Endseiten der Verbindungsstreifen oder Verbindungsstangen vor der Herstellung der stoffschlüssigen Verbindung zunächst in eine Position zwischen den Rohren angeordnet werden. In dieser Position stehen sich die Randbereiche der plattenförmigen Metallelemente beziehungsweise die Endseiten der Verbindungsstreifen oder Verbindungsstangen mit der Oberfläche der Rohre gegenüber, sodass die Verbindung durch ein Schweißverfahren oder ein Lötverfahren hergestellt werden können.

Nach einer noch weiteren Ausführungsform kann wenigstens eine Schelle, eine Manschette oder dergleichen vorgesehen sein, durch die das Stoßdämpferrohr und das Modulrohr gemeinsam umschlossen werden, und bei einem Verspannen der Schelle oder des Flansches können die Rohre auf die jeweiligen den Rohren zu gewandten Anlageseiten des Flansches gepresst werden. Auch dadurch kann eine mechanisch belastbare und fluiddichte Anordnung eines Flansches zwischen dem Stoßdämpferrohr und dem Modulrohr gebildet werden, und eine beispielsweise stoffschlüssige Verbindung zwischen dem Flansch und den Rohren kann entfallen.

Die vorliegende Erfindung richtet sich ferner auf einen Flansch zur Verbindung eines Stoßdämpferrohres mit einem externen Modulrohr eines Stoßdämpfers, wobei der Flansch ein oder mehrere Fluidkanäle aufweist, durch die das Modulrohr mit dem Stoßdämpferrohr fluidisch verbindbar ist, und es ist vorgesehen, dass der Flansch wenigstens einen Kunststoffkörper aufweist, in dem die Fluidkanäle ausgebildet sind, und dass der Flansch metallische Verbindungselemente aufweist, die sich zwischen dem Stoßdämpferrohr und dem Modulrohr erstrecken und durch die die mechanisch haltende Verbindung zwischen dem Stoßdämpferrohr und dem Modulrohr gebildet ist. Die in Zusammenhang mit dem Stoßdämpfer vorstehend beschriebenen weiteren Merkmale und zugeordneten Vorteile finden für den erfindungsgemäßen Flansch selbstverständlich gleichermaßen Berücksichtigung. Insbesondere können die Fluidkanäle durch Durchgänge im Kunststoffkörper des Flansches gebildet sein, alternativ können im Kunststoffkörper vorzugsweise metallische Rohrelemente angeordnet sein, durch die die Fluidkanäle gebildet sind.

Die metallischen Verbindungselemente können im Wesentlichen durch plan ausgebildete plattenförmige Metallelemente ausgeführt sein, wobei vorzugsweise zwei außenseitig am Kunststoffkörper parallel angeordnete plattenförmige Metallelemente vorgesehen werden können. Alternativ können die plattenförmigen Metallelemente auch im Kunststoffkörper aufgenommen sein, beispielsweise durch ein Umspritzen der Metallelemente durch das Material des Kunststoffkörpers.

Weiterhin können die metallischen Verbindungselemente durch Verbindungsstreifen oder Verbindungsstangen gebildet werden, die sich mit im Wesentlichen gleichbleibendem Querschnitt und vorzugsweise parallel zueinander durch den oder seitlich zum Kunststoffkörper erstrecken, insbesondere können 2 bis 20, vorzugsweise 3 bis 15 und weiter bevorzugt 4 bis 10 und besonders bevorzugt 6 Verbindungsstreifen oder Verbindungsstangen vorgesehen sein. Insbesondere dann, wenn sich zwei Fluidkanäle parallel zueinander durch den Flansch erstrecken, können bei der Anordnung von 6 Verbindungsstreifen oder Verbindungsstangen jede der beiden Fluidkanäle durch 4 Verbindungsstreifen oder Verbindungsstangen umrandet sein. Die 6 Verbindungsstreifen oder Verbindungsstangen können dabei in zwei Reihen zu je 3 Verbindungsstreifen oder Verbindungsstangen den Kunststoffkörper durchsetzen, und im Ergebnis umgeben 4 Verbindungsstreifen oder Verbindungsstangen jeweils einen Fluidkanal.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine perspektivische Ansicht eines Stoßdämpfers mit einem Stoßdämpferrohr, einem Modulrohr und einem die Rohre verbindenden Flansch gemäß einer ersten möglichen Ausführungsform,
- Figur 2: eine perspektivische Ansicht des Flansches gemäß der ersten Ausführungsform in Figur 1,
- Figur 3: eine geschnittene Ansicht des Flansches gemäß einer weiteren Ausführungsform und
- Figur 4: eine perspektivische, ungeschnittene Ansicht des Flansches gemäß der weiteren Ausführungsform in Figur 3.

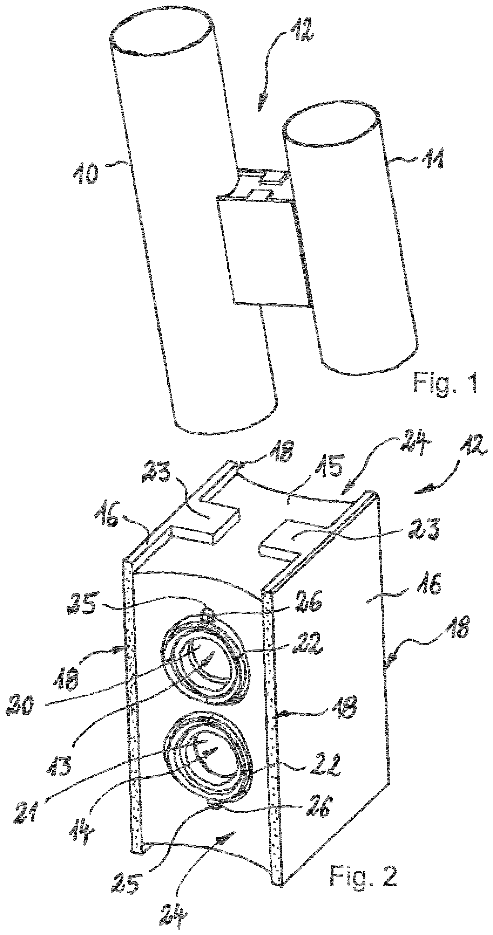

Figur 1 zeigt als ein erstes Ausführungsbeispiel in perspektivischer Ansicht Teile eines Stoßdämpfers mit einem Stoßdämpferrohr 10 und mit einem externen Modulrohr 11, und zwischen dem Stoßdämpferrohr 10 und dem externen Modulrohr 11 ist ein Flansch 12 angeordnet. Der Flansch 12 verbindet das Modulrohr 11 mit dem Stoßdämpferrohr 10, sodass das Modulrohr 11 über den Flansch 12 mechanisch am Stoßdämpferrohr 10 gehalten ist. Das Stoßdämpferrohr 10 und das Modulrohr 11 sind lediglich schematisch gezeigt, und im Modulrohr 11 kann beispielsweise eine Ventilbaugruppe aufgenommen sein, die über Fluidkanäle im Flansch 12 mit dem Stoßdämpferrohr 10 fluidisch kommuniziert. Alternativ kann im Modulrohr 11 ein zusätzliches Dämpfervolumen ausgebildet sein, welches ebenfalls Fluidkanäle im Flansch 12 erfordert, um mit dem Stoßdämpferrohr 10 fluidisch zu kommunizieren. Das erste Ausführungsbeispiel des Flansches 12 ist mit der folgenden Figur 2 detailliert dargestellt.

Figur 2 zeigt ein erstes, mögliches Ausführungsbeispiel eines Flansches 12 zur Verbindung eines Stoßdämpferrohres 10 mit einem externen Modulrohr 11, wie dies in Figur 1 gezeigt ist. Der Flansch 12 weist einen Kunststoffkörper 15 auf, in dem durch die Bildung von Durchgängen 20 und 21 im Kunststoffkörper 15 die Fluidkanäle 13 und 14 ausgebildet sind, die parallel zueinander durch den Kunststoffkörper 15 verlaufen. Die Fluidkanäle 13 und 14 erstrecken sich dabei zwischen zwei Anlageseiten 24 des Flansches 12, und es ist erkennbar, dass die Anlageseiten 24 eine Krümmung aufweisen, die der Krümmung der Außenseite des Stoßdämpferrohres 10 beziehungsweise des externen Modulrohres 11 angepasst ist.

Weiterhin weist der Flansch metallische Verbindungselemente 16 auf, die gemäß dem gezeigten ersten Ausführungsbeispiel als plattenförmige Metallelemente 16 ausgebildet sind. Die plattenförmigen Metallelemente 16 verlaufen parallel zueinander, und zwischen den plattenförmigen Metallelementen 16 befindet sich der Kunststoffkörper 15. Die plattenförmigen Metallelemente 16 bilden folglich Seitenwangen des Kunststoffkörpers 15 und dienen zur mechanisch haltenden Verbindung des externen Modulrohres 11 am Stoßdämpferrohr 10. Um die Verbindung zwischen den plattenförmigen Metallelementen 16 und dem Stoßdämpferrohr 10 beziehungsweise dem externen Modulrohr 11 herzustellen, weisen die plattenförmigen Metallelemente 16 Randbereiche 18 auf, über die die plattenförmigen Metallelemente 16 mit der Außenoberfläche des Stoßdämpferrohres 10 und des externen Modulrohres 11 beispielsweise verschweißt werden können.

Der Mündungsbereich der Fluidkanäle 13 und 14 in die Anlageseiten 24 des Kunststoffkörpers 15 weist Dichtelemente 22 auf, die im Kunststoffkörper 15, beispielsweise in nicht näher gezeigten Vertiefungen, aufgenommen sind. Die Aufnahmevertiefungen zur Aufnahme der Dichtelemente 22 im Kunststoffkörper 15 umfassen an vorgegebener Umfangsposition Nuten 25, in die an den Dichtelementen 22 angeformte Nasen 26 einsitzen, um eine radiale Ausrichtung der Dichtelemente 22 sicherzustellen. Dies kann erforderlich sein, da die Anlageseiten 24 des Flansches 12 der Krümmung der Rohraußenseite der Rohre 10, 11 angepasst sind, wodurch die Dichtelemente 22 eine unterschiedliche Schnurdicke aufweisen können und so der Krümmung der Rohraußenseiten ebenfalls angepasst sind, wodurch diese eine radiale Ausrichtung erfordern.

Sind die plattenförmigen Metallelemente 16 zwischen den Rohren 10, 11 verschweißt, so stellen Haltelaschen 23 sicher, dass der Kunststoffkörper 15 seine Position zwischen den plattenförmigen Metallelementen 16 im Betrieb des Stoßdämpfers nicht verliert. Die Haltelaschen 23 sind beispielhaft an den sich zwischen den Rohren 10, 11 erstreckenden Kanten der plattenförmigen Metallelemente 16 angeformt, und können, wie auf der oberen Seite sichtbar, auf der unteren Seite des Kunststoffkörpers 15 ebenfalls vorhanden sein.

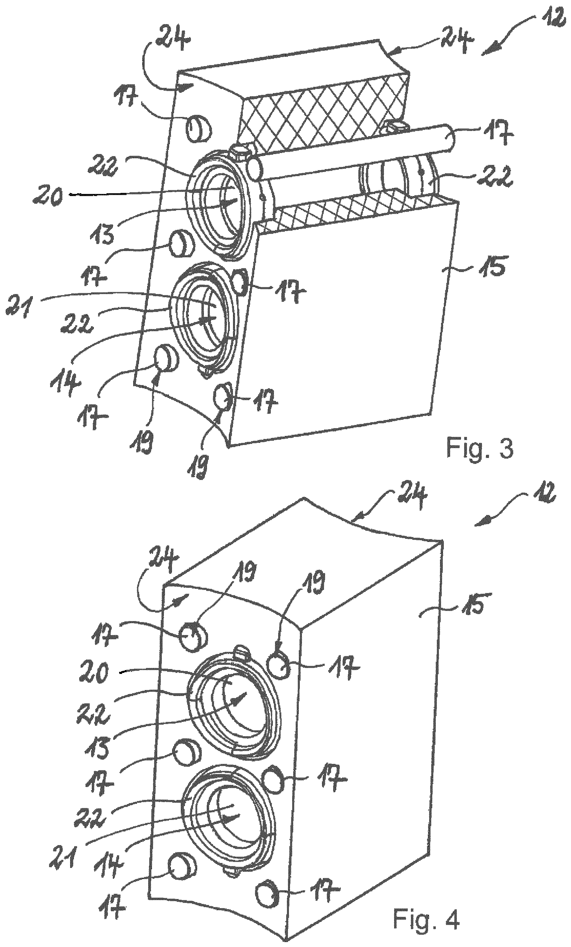

In den Figuren 3 und 4 ist ein weiteres Ausführungsbeispiel eines Flansches 12 zur Verbindung eines externen Modulrohres 11 an einem Stoßdämpferrohr 10 eines Stoßdämpfers gezeigt. Figur 3 zeigt dabei den Kunststoffkörper 15 geschnitten, und Figur 4 zeigt den Kunststoffkörper 15 in vollständiger Ansicht. Die Fluidkanäle 13 und 14 sind durch Durchgänge 20 und 21 im Kunststoffkörper 15 gebildet und laufen parallel zueinander durch den Kunststoffkörper 15 und erstrecken sich zwischen den beiden Anlageseiten 24 des Kunststoffkörpers 15, mit denen diese an die Rohre 10 und 11 angrenzen. Endseitig sind die Fluidkanäle 13 und 14 mit Dichtelementen 22 versehen.

Das zweite Ausführungsbeispiel des Flansches 12 zeigt metallische Verbindungselemente 17 in Form von Verbindungsstangen 17, die sich beispielhaft durch den Kunststoffkörper 15 hindurch erstrecken. Dabei weisen die Verbindungsstangen 17 eine Länge auf, sodass sich diese zwischen den jeweiligen Anlageseiten 24 des Kunststoffkörpers 15 erstrecken, und mit an den Verbindungsstangen 17 vorhandenen Endseiten 19, beispielhaft gezeigt an den jeweils zwei oberen Verbindungsstangen 17, werden die Verbindungsstangen 17 mit dem Stoßdämpferrohr 10 und mit dem externen Modulrohr 11 verbunden, beispielsweise durch ein Schweißverfahren.

Das Ausführungsbeispiel zeigt sechs Verbindungsstangen 17, die sich parallel zueinander durch den Kunststoffkörper 15 hindurch erstrecken, und die Verbindungsstangen 17 sind in zwei Reihen jeweils paarweise auf gleicher Höhe angeordnet, sodass jeder der Fluidkanäle 13 und 14 durch vier Verbindungsstangen 17 eingeschlossen ist.

Das Ausführungsbeispiel zeigt Verbindungsstangen 17, die sich durch den Kunststoffkörper 15 hindurch erstrecken, und es kann alternativ vorgesehen sein, dass die Verbindungsstangen 17 außerhalb des Kunststoffkörpers 15 verlaufen. Beispielsweise kann der Kunststoffkörper 15 außenseitig Aufnahmetaschen aufweisen, in denen die Verbindungsstangen 17 eingelegt sein können. Die Verbindungsstangen 17 sind mit einem runden Querschnitt gezeigt und können auf gleiche Weise auch als rechteckige, beispielsweise auch flache, Verbindungsstangen 17 ausgeführt sein.

Ein weiteres Ausführungsbeispiel eines Flansches 12 kann metallische Verbindungselemente 16, 17 aufweisen, die sowohl aus plattenförmigen Metallelementen 16 als auch aus Verbindungsstangen 17 bestehen, sodass der Flansch 12 beide Formen von Verbindungselementen 16, 17 vereint. Die plattenförmigen Metallelemente 16 können dabei auch auf der oberen und unteren Seite des Kunststoffkörpers 15 in Bezug auf die Erstreckungsrichtung der beiden Rohre 10, 11 angebracht sein. Der Vorteil der einfachen Herstellbarkeit des Flansches 12 und insbesondere der metallischen Verbindungselemente 16, 17 ist insbesondere dann erreicht, wenn die Verbindungselemente 16, 17 von einem endlos bereitgestellten Bandmaterial oder Stangenmaterial abgelängt werden können, sodass die metallischen Verbindungselemente 16, 17 bevorzugt einen gleichförmigen Querschnitt in Ihrer gesamten Länge zwischen den beiden Rohren 10, 11 aufweisen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen erfindungswesentlich sein.

### Bezuaszeichenliste

- 10: Stoßdämpferrohr
- 11: externes Modulrohr
- 12: Flansch
- 13: Fluidkanal
- 14: Fluidkanal
- 15: Kunststoffkörper
- 16: metallisches Verbindungselement, plattenförmiges Metallelement
- 17: metallisches Verbindungselement, Verbindungsstange
- 18: Randbereich des plattenförmigen Metallelementes
- 19: Endseite der Verbindungsstange
- 20: Durchgang
- 21: Durchgang
- 22: Dichtelement
- 23: Haltelasche
- 24: Anlageseite
- 25: Nut
- 26: Nase

## Patentansprüche

1. Stoßdämpfer mit einem Stoßdämpferrohr (10) und mit einem externen Modulrohr (11), das mittels einem Flansch (12) außenseitig am Stoßdämpferrohr (10) haltend angeordnet ist, wobei der Flansch (12) ein oder mehrere Fluidkanäle (13, 14) aufweist, die das Modulrohr (11) mit dem Stoßdämpferrohr (10) fluidisch koppeln, und wobei der Flansch (12) einen Kunststoffkörper (15) aufweist, in dem die Fluidkanäle (13, 14) zur fluidischen Kopplung ausgebildet sind und dass der Flansch (12) weiterhin metallische Verbindungselemente (16, 17) aufweist, die sich zwischen dem Stoßdämpferrohr (10) und dem Modulrohr (11) erstrecken und durch die die haltende Verbindung zwischen dem Stoßdämpferrohr (10) und dem Modulrohr (11) gebildet ist,
**dadurch gekennzeichnet, dass** die metallischen Verbindungselemente (17) durch Verbindungsstreifen oder Verbindungsstangen (17) mit im Wesentlichen gleich bleibendem Querschnitt zwischen dem Stoßdämpferrohr (10) und dem externen Modulrohr (11) gebildet sind, wobei sich die Verbindungsstreifen oder die Verbindungsstangen (17) durch den Kunststoffkörper (15) hindurch erstrecken.

2. Stoßdämpfer nach Anspruch 1, **dadurch gekennzeichnet, dass** die metallischen Verbindungselemente (16) durch plattenförmige Metallelemente (16) ausgeführt sind, die vorzugsweise außenseitig am Kunststoffkörper (15) angeordnet sind.

3. Stoßdämpfer nach Anspruch 2, **dadurch gekennzeichnet, dass** die plattenförmigen Metallelemente (16) Randbereiche (18) aufweisen, mit denen diese mit dem Stoßdämpferrohr (10) und mit dem externen Modulrohr (11) insbesondere stoffschlüssig verbunden sind.

4. Stoßdämpfer nach einem der Ansprüche 1 bis 3, **dadurch gekennzeichnet, dass** die Verbindungsstreifen oder die Verbindungsstangen (17) mit einer ersten Endseite (19) mit dem Stoßdämpferrohr (10) und mit einer zweiten Endseite (19) mit dem externen Modulrohr (11) insbesondere stoffschlüssig verbunden sind.

5. Stoßdämpfer nach einem der vorgenannten Ansprüche, **dadurch gekennzeichnet, dass** die Verbindungsstreifen oder die Verbindungsstangen (17) einen runden, einen rechteckigen und bevorzugt einen flachen, band- oder stangenförmigen Querschnitt aufweisen und insbesondere aus einem abgelängten Bandmaterial, Streifenmaterial oder Stangenmaterial hergestellt sind.

6. Stoßdämpfer nach einem der vorgenannten Ansprüche, **dadurch gekennzeichnet, dass** die Fluidkanäle (13, 14) durch Durchgänge (20, 21) im Kunststoffkörper (15) gebildet sind.

7. Stoßdämpfer nach einem der vorgenannten Ansprüche, **dadurch gekennzeichnet, dass** zwischen dem Kunststoffkörper (15) und dem Stoßdämpferrohr (10) und/oder dem Modulrohr (11) Dichtelemente (22) zur Dichtung der Durchgänge angeordnet sind, insbesondere dass der Kunststoffkörper (15) zur Aufnahme von Dichtelementen (22) ausgebildet ist.

8. Flansch (12) zur Verbindung eines Stoßdämpferrohres (10) mit einem externen Modulrohr (11) eines Stoßdämpfers, wobei der Flansch (12) ein oder mehrere Fluidkanäle (13, 14) aufweist, durch die das Modulrohr (11) mit dem Stoßdämpferrohr (10) fluidisch gekoppelt ist, wobei wenigstens ein Kunststoffkörper (15) vorgesehen ist, in dem die Fluidkanäle (13, 14) zur fluidischen Kopplung ausgebildet sind, und wobei metallische Verbindungselemente (16, 17) vorgesehen sind, die sich zwischen dem Stoßdämpferrohr (10) und dem Modulrohr (11) erstrecken und durch die die haltende Verbindung zwischen dem Stoßdämpferrohr (10) und dem Modulrohr (11) gebildet ist,
**dadurch gekennzeichnet, dass** die metallischen Verbindungselemente (17) durch Verbindungsstreifen oder Verbindungsstangen (17) mit im Wesentlichen gleich bleibendem Querschnitt zwischen dem Stoßdämpferrohr (10) und dem externen Modulrohr (11) gebildet sind, wobei sich die Verbindungsstreifen oder die Verbindungsstangen (17) durch den Kunststoffkörper (15) hindurch erstrecken.

9. Flansch (12) nach Anspruch 8, **dadurch gekennzeichnet, dass** die Fluidkanäle (13, 14) durch Durchgänge (20, 21) im Kunststoffkörper (16) gebildet sind.

10. Flansch (12) nach Anspruch 8 oder 9, **dadurch gekennzeichnet, dass** die metallischen Verbindungselemente (16) durch plattenförmige Metallelemente (16) ausgeführt sind, wobei vorzugsweise zwei außenseitig am Kunststoffkörper (15) parallel angeordnete plattenförmige Metallelemente (16) vorgesehen sind.

11. Flansch (12) nach Anspruch 8 oder 9, **dadurch gekennzeichnet, dass** die metallischen Verbindungselemente (17) durch Verbindungsstreifen oder Verbindungsstangen (17) gebildet sind, die sich vorzugsweise mit im Wesentlichen gleich bleibendem Querschnitt und insbesondere parallel zueinander durch den oder seitlich zum Kunststoffkörper (15) erstrecken, insbesondere wobei 2 bis 20, vorzugsweise 3 bis 15 und weiter bevorzugt 4 bis10 und besonders bevorzugt 6 Verbindungsstreifen oder Verbindungsstangen (17) vorgesehen sind.

## Claims

1. Shock absorber having a shock absorber tube (10) and having an external module tube (11) which is arranged retentively on the outside of the shock absorber tube (10) by means of a flange (12), wherein the flange (12) has one or more fluid ducts (13, 14) which fluidically couple the module tube (11) to the shock absorber tube (10), and wherein the flange (12) has a plastics body (15) in which the fluid ducts (13, 14) for the fluidic coupling are formed, and that the flange (12) furthermore has metallic connecting elements (16, 17) which extend between the shock absorber tube (10) and the module tube (11) and by means of which the retentive connection between the shock absorber tube (10) and the module tube (10) is formed,
**characterized in that** the metallic connecting elements (17) are formed by connecting strips or connecting bars (17) with a substantially unchanging cross section between the shock absorber tube (10) and the external module tube (11), wherein the connecting strips or the connecting bars (17) extend through the plastics body (15).

2. Shock absorber according to Claim 1, **characterized in that** the metallic connecting elements (16) are formed by plate-shaped metal elements (16) which are preferably arranged on the outside of the plastics body (15).

3. Shock absorber according to Claim 2, **characterized in that** the plate-shaped metal elements (16) have edge regions (18) by means of which they are connected, in particular substance-to-substance, to the shock absorber tube (10) and to the external module tube (11).

4. Shock absorber according to one of Claims 1 to 3, **characterized in that** the connecting strips or the connecting bars (17) are connected, in particular substance-to-substance, by way of a first end side (19) to the shock absorber tube (10) and by way of a second end side (19) to the external module tube (11).

5. Shock absorber according to one of the preceding claims, **characterized in that** the connecting strips or the connecting bars (17) have a circular, rectangular and preferably flat, band-shaped or bar-shaped cross section, and are produced in particular from a cut-off portion of band material, strip material or bar material.

6. Shock absorber according to one of the preceding claims, **characterized in that** the fluid ducts (13, 14) are formed by passages (20, 21) in the plastics body (15).

7. Shock absorber according to one of the preceding claims, **characterized in that**, between the plastics body (15) and the shock absorber tube (10) and/or the module tube (11), there are arranged sealing elements (22) for sealing the passages, in particular **in that** the plastics body (15) is designed for receiving sealing elements (22).

8. Flange (12) for connecting a shock absorber tube (10) to an external module tube (11) of a shock absorber, wherein the flange (12) has one or more fluid ducts (13, 14) by which the module tube (11) is fluidically coupled to the shock absorber tube (10), wherein at least one plastics body (15) is provided in which the fluid ducts (13, 14) for the fluidic coupling are formed, and wherein metallic connecting elements (16, 17) are provided which extend between the shock absorber tube (10) and the module tube (11) and by means of which the retentive connection between the shock absorber tube (10) and the module tube (11) is formed, **characterized in that** the metallic connecting elements (17) are formed by connecting strips or connecting bars (17) with a substantially unchanging cross section between the shock absorber tube (10) and the external module tube (11), wherein the connecting strips or the connecting bars (17) extend through the plastics body (15).

9. Flange (12) according to Claim 8, **characterized in that** the fluid ducts (13, 14) are formed by passages (20, 21) in the plastics body (16).

10. Flange (12) according to Claim 8 or 9, **characterized in that** the metallic connecting elements (16) are formed by plate-shaped metal elements (16), wherein preferably two plate-shaped metal elements (16) are provided which are arranged in parallel on the outside of the plastics body (15) .

11. Flange (12) according to Claim 8 or 9, **characterized in that** the metallic connecting elements (17) are formed by connecting strips or connecting bars (17) which extend preferably with a substantially unchanging cross section, and in particular parallel to one another, through or to the side of the plastics body (15), wherein in particular 2 to 20, preferably 3 to 15 and more preferably 4 to 10 and particularly preferably 6 connecting strips or connecting bars (17) are provided.

## Revendications

1. Amortisseur de chocs avec un tube d'amortisseur de chocs (10) et avec un tube modulaire externe (11), qui est disposé de façon maintenue extérieurement sur le tube d'amortisseur de chocs (10) au moyen d'une aile (12), dans lequel l'aile (12) présente un ou plusieurs canaux de fluide (13, 14), qui couplent le tube modulaire (11) fluidiquement au tube d'amortisseur de chocs (10), et dans lequel l'aile (12) présente un corps en matière plastique (15), dans lequel les canaux de fluide (13, 14) destinés au couplage fluidique sont formés, et dans lequel l'aile (12) présente en outre des éléments de liaison métalliques (16, 17), qui s'étendent entre le tube d'amortisseur de chocs (10) et le tube modulaire (11) et par lesquels la liaison de maintien entre le tube d'amortisseur de chocs (10) et le tube modulaire (11) est formée,
**caractérisé en ce que** les éléments de liaison métalliques (17) sont formés par des bandes de liaison ou des barres de liaison (17) avec une section transversale qui reste essentiellement constante entre le tube d'amortisseur de chocs (10) et le tube modulaire (11), dans lequel les bandes de liaison ou les barres de liaison (17) s'étendent à travers le corps en matière plastique (15).

2. Amortisseur de chocs selon la revendication 1, **caractérisé en ce que** les éléments de liaison métalliques (16) sont formés par des éléments métalliques en forme de plaques (16), qui sont disposés de préférence extérieurement sur le corps en matière plastique (15).

3. Amortisseur de chocs selon la revendication 2, **caractérisé en ce que** les éléments métalliques en forme de plaques (16) présentent des régions de bord (18), avec lesquelles ceux-ci sont assemblés, en particulier par assemblage matériel, au tube d'amortisseur de chocs (10) et au tube modulaire externe (11).

4. Amortisseur de chocs selon l'une quelconque des revendications 1 à 3, **caractérisé en ce que** les bandes de liaison ou les barres de liaison (17) sont assemblées, en particulier par assemblage matériel, par un premier côté d'extrémité (19) au tube d'amortisseur de chocs (10) et par un deuxième côté d'extrémité (19) au tube modulaire externe (11).

5. Amortisseur de chocs selon l'une quelconque des revendications précédentes, **caractérisé en ce que** les bandes de liaison ou les barres de liaison (17) présentent une section transversale ronde, rectangulaire et de préférence plate, en forme de bande ou de barre, et sont fabriquées en particulier en un matériau de feuillard, un matériau de bande ou un matériau de barre coupé à longueur.

6. Amortisseur de chocs selon l'une quelconque des revendications précédentes, **caractérisé en ce que** les canaux de fluide (13, 14) sont formés par des passages (20, 21) dans le corps en matière plastique (15).

7. Amortisseur de chocs selon l'une quelconque des revendications précédentes, **caractérisé en ce que** des éléments d'étanchéité (22) sont disposés entre le corps en matière plastique (15) et le tube d'amortisseur de chocs (10) et/ou le tube modulaire (11) pour l'étanchéité des passages, en particulier **en ce que** le corps en matière plastique (15) est configuré de façon à recevoir des éléments d'étanchéité (22).

8. Aile (12) destinée à la liaison d'un tube d'amortisseur de chocs (10) avec un tube modulaire externe (11) d'un amortisseur de chocs, dans laquelle l'aile (12) présente un ou plusieurs canaux de fluide (13, 14), par lesquels le tube modulaire (11) est couplé fluidiquement au tube d'amortisseur de chocs (10), dans laquelle il est prévu au moins un corps en matière plastique (15), dans lequel les canaux de fluide (13, 14) destinés au couplage fluidique sont formés, et dans laquelle il est prévu des éléments de liaison métalliques (16, 17), qui s'étendent entre le tube d'amortisseur de chocs (10) et le tube modulaire (11) et par lesquels la liaison de maintien entre le tube d'amortisseur de chocs (10) et le tube modulaire (11) est formée,
**caractérisée en ce que** les éléments de liaison métalliques (17) sont formés par des bandes de liaison ou des barres de liaison (17) avec une section transversale qui reste essentiellement constante entre le tube d'amortisseur de chocs (10) et le tube modulaire (11), dans laquelle les bandes de liaison ou les barres de liaison (17) s'étendent à travers le corps en matière plastique (15).

9. Aile (12) selon la revendication 8, **caractérisée en ce que** les canaux de fluide (13, 14) sont formés par des passages (20, 21) dans le corps en matière plastique (16) .

10. Aile (12) selon la revendication 8 ou 9, **caractérisée en ce que** les éléments de liaison métalliques (16) sont formés par des éléments métalliques en forme de plaques (16), dans laquelle il est prévu de préférence deux éléments métalliques en forme de plaques (16) disposés parallèlement extérieurement sur le corps en matière plastique (15).

11. Aile (12) selon la revendication 8 ou 9, **caractérisée en ce que** les éléments de liaison métalliques (17) sont formés par des bandes de liaison ou des barres de liaison (17), qui s'étendent de préférence avec une section transversale qui reste essentiellement constante et en particulier parallèlement l'un à l'autre à travers le ou latéralement au corps en matière plastique (15), en particulier dans laquelle il est prévu 2 à 20, de préférence 3 à 15 et de préférence encore 4 à 10 et en particulier de préférence 6 bandes de liaison ou barres de liaison (17).
